# EUROPEAN PATENT SPECIFICATION

(11) **EP 1 661 130 B1**
(45) Date of publication and mention of the grant of the patent: **09.01.2008**
(21) Application number: 04744824.6
(22) Date of filing: 24.08.2004
(51) Int. Cl.: G11B 17/04, G11B 25/04, G11B 33/12

(54) **DRIVE FOR DISC SHAPED OPTICAL DATA CARRIER**
LAUFWERK FÜR EINEN SCHEIBENFÖRMIGEN OPTISCHEN DATENTRÄGER
LECTEUR POUR SUPPORT DE DONNEES OPTIQUES DISCOIDE

(30) Priority: 26.08.2003 EP 03102652
(43) Date of publication of application: 31.05.2006
(73) Proprietor: Koninklijke Philips Electronics N.V., 5621 BA Eindhoven (NL)
(72) Inventor: EBERDORFER, Wolfgang, A-1101 Vienna (AT)
(74) Representative: Damen, Daniel Martijn
(86) International application number: PCT/IB2004/051543
(87) International publication number: WO 2005/020229

(56) References cited:
- US-A- 6 151 284
- US-A1- 2001 030 931

## Description

The invention relates to a drive for a disc-shaped optical data carrier with a motherboard on which motherboard electronic components for controlling drive functions are arranged, and with a data carrier drive motor for rotating driving of the data carrier and with an optical scanning unit for optical scanning of the data carrier, and with transporting means which transporting means are designed for picking up the data carrier and for transporting the data carrier into the drive and for transporting the data carrier out of the drive.

The invention further relates to a consumer electronics (CE) appliance with a drive according to the type presented in the first paragraph.

The invention further relates to a method of transporting a disc-shaped optical data carrier into a drive for the optical data carrier and out of the drive, said drive having a motherboard on which motherboard electronic components for the control of drive functions are arranged.

Conventional drives for a disc-shaped optical data carrier, such as CD, CD-ROM or DVD, contain a chassis and a drive device and a scanning device for the data carrier and at least one motherboard, on which motherboard there are electronic elements and electronic components for controlling the drive. Said motherboard is often also called a circuit board or carrying plate or retaining plate.The scanning device for the disc-shaped data carrier comprises an optical scanning unit, that in technical circles is also often called an optical pick-up unit (OPU and that contains an optical system for scanning the data carrier. The optical scanning device is carried movably on a carriage, which is held movably on the chassis. The chassis also serves for mounting various electromechanical components for drive and displacement of the carriage. In addition, a data carrier drive motor of the drive device for rotating driving of the disc-shaped data carrier is arranged on the chassis. The optical scanning unit carries all the necessary components for scanning the optical data carrier, such as a laser beam source, various mirrors and lenses, a photodetector, actuators for focusing the laser beam onto the data track of the data carrier and for tracking the laser beam along the data track. Usually a driver circuit for the laser and a signal processor for the photodetector are also housed in the optical scanning device. These electrical components are generally arranged on a flat foil, which serves as a flexible printed circuit board and at the same time creates a flexible connection to the control electronics located outside the optical scanning device. The whole assembly of chassis and scanning device is termed CD/DVD mechanism by engineering specialists, for which the abbreviation CDM/DVDM is used, and this will also be used in the present description. The CDM/DVDM forms, together with a drawer that is provided as transporting means, which is provided for holding a data carrier and for transporting the data carrier into the drive and for transporting the data carrier out of the drive, and the mechanism provided for driving the drawer and a main motherboard (main board), the aforementioned drive, which is also termed "basic engine". On the main motherboard there is a controller for the basic control functions of the basic engine, some driver circuits for servo motors and actuators, a DVD/CD decoder and an error correcting logic circuit, and in the case of a drive suitable for writing on the data carrier, circuits for coding an incoming data stream into a data signal suitable for writing, depending on the type of recordable optical data carrier.

A drive of this kind is known from document US 2001/0030926 A1 reflecting the preamble of the independent claims. A disadvantage of the known drive is that because of the many individual parts it is difficult to construct a device with a small overall height. The large number of individual parts is also problematic during manufacture, because as well as the actual assembly steps it is also necessary to carry out numerous adjustment steps, to align the individual parts with one another. Furthermore, wiring of the various modules to one another causes problems, both with respect to the required space and with respect to the electrical reliability of the wiring, because several of the modules that are wired together are moved relative to one another during operation.

Similar disc drives are known from US 2001/0030931 A1 or from US 6 151 284 A.

It may be mentioned that the construction of a DVD/CD player/recorder as a stand-alone unit requires, in addition to the basic engine, further components such as a power supply unit, an input/output (I/O) board with audio digital analog converters and a tuner for a recorder function. Furthermore, a so-called "backend" or digital motherboard (board) is required, which includes the circuits for coding and decoding the entire digital data stream. Finally, a front plate is also to be provided, which carries the controls and indications. It is understandable that the increased number of modules intensifies the problem of required space, and expensive assembly and wiring.

The problem to be solved by the invention is to create a drive for a disc-shaped optical data carrier according to the type stated in the first paragraph, a consumer electronics (CE) appliance according to the type stated in the second paragraph, and a method of transporting a disc-shaped optical data carrier according to the type stated in the third paragraph, in which the aforementioned disadvantages are avoided.

To solve the problem stated above, in a drive according to the invention, features according to the invention are provided, so that a drive according to the invention can be characterized as follows:

Drive for a disc-shaped optical data carrier with a motherboard on which motherboard electronic components for controlling drive functions are arranged and with a data carrier drive motor for rotating driving of the data carrier and with an optical scanning unit for optical scanning of the data carrier and with transporting means formed for picking up the data carrier and for transporting the data carrier into the drive and for transporting it out of the drive, wherein the transporting means are realized by means of the motherboard, said motherboard being supported on bearings so that it can be moved out of the drive and can be moved into the drive.

To solve the problem stated above, a drive according to the invention is provided in a consumer electronics appliance of this kind.

To solve the problem stated above, in a method according to the invention, features according to the invention are provided, so that a method according to the invention can be characterized as follows:

Method of transporting a disc-shaped optical data carrier into a drive for the optical data carrier and out of the drive, said drive having a motherboard on which electronic components for controlling drive functions are arranged, wherein the data carrier is transported by means of the motherboard and wherein the motherboard is moved out of the drive and is moved into the drive.

As a result of the features according to the invention, the number of components is reduced relative to conventional appliances. In particular the number of connecting means required is reduced, which contributes to weight reduction and to higher operational reliability. Furthermore, fewer mechanical parts are required than in appliances of the state of the art, and assembly of the entire drive can be automated using robots. It proved especially advantageous that it is possible to do without a conventional drawer for holding and transporting the data carrier and frames or rails for guiding the drawer. Finally, as a result of the features according to the invention, it is possible to achieve a smaller overall height of the drive than with known drives.

According to the measures in claims 2 and 16, the advantage is obtained that the required number of components is minimized and relatively few adjustment steps have to be carried out.

According to the measures of claims 3 and 17, the advantage is obtained that the edges of the motherboard are not worn, and there is a constant, low resistance to sliding.

According to the measures of claim 4, the advantage is obtained that the edge protection is relatively easy to manufacture and can be joined to the motherboard in a relatively uncomplicated manner.

According to the measures of claims 5 and 18, the advantage is obtained that it is possible to do without a frame carrying the data carrier drive motor and that it leads to considerable simplification in manufacture, if the drive motor can also be arranged on the motherboard (circuit board). During manufacture, the data carrier drive motor can be placed on the motherboard with high positional accuracy and forms, together with the motherboard, a multi-purpose drive unit for holding and transporting the data carrier and for rotating drive of the data carrier.

According to the measures of claims 6 and 19, the advantage is obtained that the motherboard can be guided with relatively high accuracy.

According to the measures of claims 7 and 20, the advantage is obtained that the location or position of the motherboard can be adjusted subsequently.

According to the measures of claim 8, the advantage is obtained that a relatively high operational reliability is obtained with respect to flexible electrical connections.

According to the measures of claims 9 and 20, the advantage is obtained that a compact and robust construction of the transporting means is ensured.

According to the measures of claims 10 and 21, the advantage is obtained that compared with conventional appliances, one motor can be saved, which represents a relatively large saving on the material costs.

According to the measures of claims 11 and 22, the advantage is obtained that the inserted data carrier and/or the optical scanning device are decoupled from mechanical vibrations, which affect the drive in some circumstances.

According to the measures of claims 12 and 23, the advantage of simpler manufacture of the drive and a further reduction of the number of components and a more compact modular construction is obtained.

According to the measures of claims 13 and 24, the advantage of simpler manufacture and of a further reduction of the number of components is obtained.

It should be mentioned that also in the case of a CE appliance according to claim 14 the measures stated in connection with the drive are envisaged according to one of the claims 2 to 13 and accordingly the advantages stated in the case of the drive are also of benefit with such a CE appliance.

These and other aspects of the invention are apparent from and will be elucidated with reference to the embodiments described hereinafter.

The invention will be described below with reference to three embodiments represented in the drawings, but the invention is not limited to these.
Fig. 1 shows a schematic, perspective view of a drive according to the invention with disc-shaped optical data carrier transported into the drive according to a first embodiment of the invention.
Fig. 2 shows, in a similar manner to Fig. 1, the drive according to Fig. 1 with a disc-shaped optical data carrier transported out of the drive.
Fig. 3 shows, in a similar manner to Fig. 1, details of the drive relevant to the invention according to a second embodiment of the invention.
Fig. 4 shows, in a similar manner to Fig. 4, details of the drive relevant to the invention according to a third embodiment of the invention.

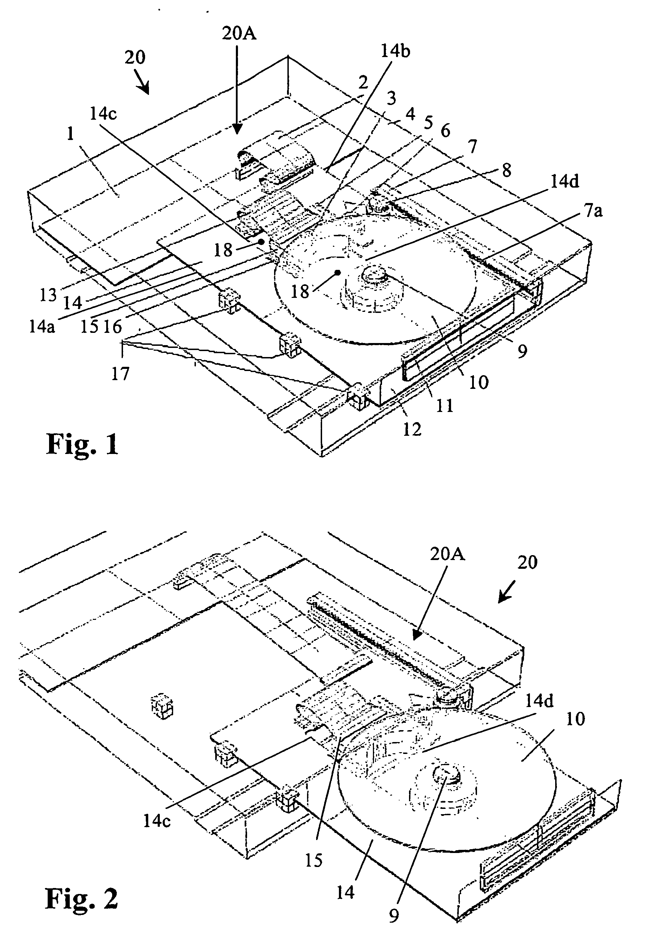

Fig. 1 shows a drive 20A according to the invention for a disc-shaped optical data carrier 10, said drive 20A being built into a CD/DVD player/recorder 20 in the present embodiment. The CD/DVD player/recorder 20 contains motherboards for electronic and electrical elements and components, said motherboards being designated as boards hereinafter. An I/O board 1 is provided, on which there are (not shown in detail): input/output connectors, audio-digital/analog converters and a tuner for a recorder function. The I/O board 1 is fixed in a housing 4. The I/O board 1 communicates via a flat cable 2 with a main board 14, which comprises both the circuits of conventional "backend" boards, i.e. circuits for the coding and decoding of the entire digital data stream, and the electronic modules of the "basic engine", such as a controller for the basic control functions of the "basic engine", driver circuits for servo motors and actuators, a DVD/CD decoder and an error correction logic circuit, and circuits for coding an incoming data stream into a suitable write signal for writing on the data carrier 10 for the recorder function. By means of the main board 14, transporting means are achieved, which are designed for holding the data carrier 10 and for the transporting of the data carrier 10 into the drive 20A and for transporting it out of the drive 20A. Accordingly, the known function in conventional appliances, of a drawer for carrying or holding the data carrier 10 and for transporting the data carrier 10 is accomplished. For this purpose the main board 14 has sliding support in housing 4, so that it can be moved out of housing 4 and back into housing 4. The sliding support for guiding the main board 14 in its translational motion for inserting or ejecting the optical data carrier 10 is provided by sliding bearing blocks 17, which engage with or encircle a longitudinal edge 14a of the main board, and a guide rail 7, in which the opposite longitudinal edge 14b of the main board 14 is guided. The guide rail 7 comprises a stationary toothed rack 7a, which engages with a pinion mounted on the drive shaft of a drive motor 8. It should be mentioned at this point that instead of the sliding bearing blocks 17 it is also possible to provide rollers or wheels as the supporting means, between which the motherboard 14 or main board 14 is guided. Bearings with a magnetic action are also conceivable.

The drive motor 8 is secured to the main board 14 directly and soldered to its connecting terminals, so that no separate connecting wires are required for the drive motor 8. When the drive motor 8 operates, depending on its direction of rotation the main board 14 slides out of housing 4 or back into housing 4. As an alternative to a rack-and-pinion mechanism, drive motor 8 can also drive the main board 14 by means of a worm gear mechanism. It should be mentioned that it is also possible to provide a belt drive or a mechanism which, when moving the main board 14 out of the appliance 20, overcomes the restoring force of a spring acting upon the main board 14. Since the main board 14 is constructed as a multilayer board with typically four to six layers, because of the numerous highly integrated electronic components that are located on it, with each layer as a rule consisting of a copper foil, which is carried by an epoxy resin carrier, and all layers are laminated together, the main board 14 has excellent bending and torsional strength and is, owing to these excellent mechanical properties, eminently suitable as the transporting means for holding and transporting the optical data carrier 10. By using the main board 14 as the transporting means, we are not required to provide a separate transporting means and its bearings, so that compared with known appliances, a relatively large reduction in material costs and cost of assembly can be achieved.

It should be mentioned that the length of the flat cable 2 between the I/O board 1 and the main board 14 is dimensioned so that the flat cable 2 cannot cause any restriction of the movement of the main board 14.

Although it would theoretically be possible to arrange the components of the I/O board 1 on the main board 14 as well, on grounds of cost this is not preferred. Since the main board 14 contains many highly integrated (LSI) circuits, whose electrical interconnection can only be achieved with a multilayer board, the price per unit area of this main board 14 is relatively high. On the other hand, large-area components, such as plugs or sockets, are arranged on the I/O board 1, but they have few connecting legs, so that an inexpensive single-layer board is sufficient for their wiring. Moreover, this still does not avoid fixing sockets etc. on the housing, which can be effected easily by means of the I/O board 1.

On the side of the main board 14 facing the front of the CD/DVD player/recorder 20, a vertical display 11 is soldered rigidly to the main board 14. This display 11 serves for indicating the essential functions of the CD/DVD player/recorder 20 and generally comprises an integrated display controller for controlling the display. Soldering the display 11 directly on the main board 14 once again saves an electrical connecting means, such as an edge connector or a flat cable, as is quite possibly required in conventional appliances in which the display is mounted on the front panel of the CD/DVD player/recorder and communicates with a main board via said connecting means. In a similar manner, in the present embodiment of the invention operating elements, such as push-buttons and switches, can be soldered directly to the main board 14 or can be integrated with the display. To protect the display 11 and generally the interior of the CD/DVD player/recorder against tinkering and soiling, a front cover 12 is secured to the main board 14 in front of the display 11.

The main board 14 also carries a data carrier drive motor 9, the drive shaft of which carries a clamping device for clamping and rotating the disc-shaped optical data carrier 10. The data carrier drive motor 9 is soldered directly onto the main board 14, so that once again there is no need for a connecting lead.

A recess or slot-shaped opening 18, which is defined by inside edges (see reference marks 14c and 14d) of the main board 14, is formed in the main board 14. An optical scanning device 15, called an optical pick-up unit (OPU) in the technical jargon, the bottom portion of which is formed as a carriage, slides in opening 18. The OPU 15 is at the same time carried by the main board 14 and the OPU 15 can move with a translational motion on the main board 14. From this OPU 15, a lens 3 for the laser beam can be seen in the drawing. The remaining portions of the OPU 15 are contained in the housing of the OPU 15 and cannot be seen from the drawing. The OPU 15 has sliding rails 16 on the left and right, which engage with or encircle inner edges 14c of the main board 14 opposite the sliding rails 16 and slide along these inner edges 14c and thus guide the OPU 15. For good electrical and/or thermal connection between the OPU 15 and the main board 14, the sliding rails 16 are made of material with good electrical and/or thermal conductivity and are designed for maximum contact with the main board 14. The electrical connection between OPU 15 and main board 14 via the sliding rails 16 additionally serves for electrical supply of the OPU 15. The good electrical connection between OPU 15 and main board 14 via the sliding rails 17 also serves for improved grounding of OPU 15 on a grounding surface of the main board 14 and thus helps to lessen EMC, EMI and ESD problems. The good thermal connection between OPU 15 and main board 14 also serves for abstracting heat from the OPU 15 to the main board 14, and for this purpose a so-called grounding surface covering a large area is provided for example on the top and/or on the underside of the main board 14, and is connected to an electrical reference potential. In this case the main board 14 also acts as a heat sink for the OPU 15. Control of the OPU 15 takes place via a flat film connection 13 by electronic components mounted on the main board 14.

The OPU 15 is guided in the opening 18 in the main board 14 in such a way that the OPU 15, and especially the lens 3 for the laser beam, can move radially relative to the disc-shaped optical data carrier 10 and can completely scan a read-out zone of the data carrier 10 radially. For translational motion of the OPU 15 the latter is provided with a toothed rack 5 of a suitable length, which engages with the carriage motor 6 soldered on the main board 14. It would of course also be possible to arrange the rack 5 on the main board 14 and the carriage motor 6 on the OPU 15, but that variant has the disadvantages of a large total weight of the OPU 15 and the need for a connecting cable between main board 14 and carriage motor 6.

It should be mentioned that to permit sliding of the OPU 15, it is also possible to provide wheels or rollers or other bearings permitting sliding, for example bearings with a magnetic action.

It should be mentioned that the carriage motor 6 and the drawer drive motor 8 can be combined as a single motor, which can selectively drive either the OPU 15 or the main board 14 via an internal gear mechanism or an internal switching mechanism. Since the OPU 15 and the main board 14 of the CD/DVD player/recorder must never be moved simultaneously during operation, a single motor is sufficient for these purposes. It merely requires some mechanical change-over components, so as to couple either the rack of the OPU 15 or the rack 7 of the main board to the single motor. Change-over of coupling can be effected by a simple solenoid or some other actuator.

The carriage motor 6 and the drive motor 8 are produced as conventional motors. They can, however, also be formed by ultra-flat, disc-shaped motors, in which the stator coil and its driving and commutating circuits are soldered on the board directly.

The main board 14 thus replaces the frame for guiding the OPU 15 used in appliances according to the state of the art, giving an appreciable saving of material and costs. Owing to its design as a multilayer board, the main board 14 has the required bending and torsional strength to be able to guide and carry the OPU within the specified tolerances. If necessary the main board 14 is supported on housing 4 via vibration-damping elements, and for example the sliding bearing blocks 16 and the guide rails 7 are of vibration-damping design or can in their turn have vibration-damping bearings.

Fig. 2 shows the drive 20A together with the inserted disc-shaped optical data carrier 10 in its ejected position. Since the components of this drive 20A and their functions have already been described with reference to Fig. 1, further explanation is unnecessary. However, by comparing Figs. 1 and 2 we can clearly see the function of the main board 14 as transporting means for inserting and ejecting the optical data carrier 10.

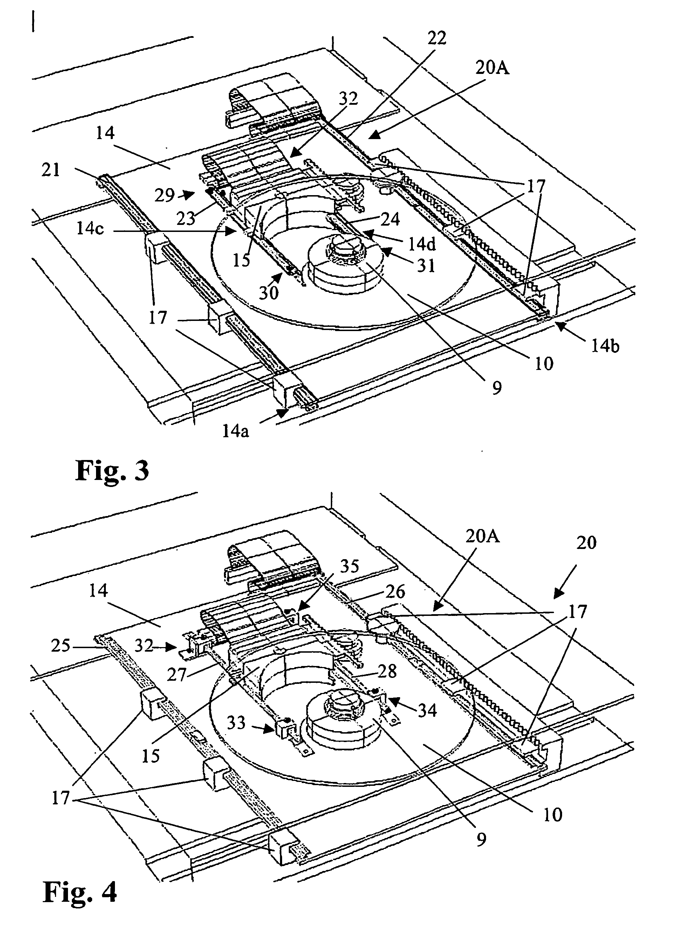

To increase the accuracy of guidance of the main board 14 in the sliding bearings (sliding bearing blocks 17, guide rail 16) and of the OPU 15 on the main board 14, various additional measures can be taken. These measures comprise on the one hand the provision of edge protection on the outer edges 14a, 14b and/or the inner edge 14c, 14d of the main board 14, with this edge protection simultaneously serving as sliding and guiding means. The edge protection can, for example, as shown in Fig. 3, be provided as a U-profile metal sheet 21, 22, 23 and 24 encircling the respective edge of the board 14a and 14b or 14c and 14d. As an alternative to that, the main board 14 is not guided directly in a sliding bearing 17 and/or the OPU 15 is not guided directly on the edges of the main board 14, but in each case a guiding means is provided, which consists of accurately machined metal, for example guide strips or, as shown in Fig. 4, guide bars 25 to 28. These guiding means can be fastened to the main board 14 by pressing-in, snap-fitting, gluing, screwing, soldering or in some other suitable manner. When guide bars 25 to 28 or guide strips are used for sliding bearing of the OPU 15 on the main board 14, the opening 18 in the main board 14 can be omitted and the OPU 15 can be moved over the modules arranged on the main board 14. This has the advantages that the whole area of the main board can be used for placement of modules and that the main board 14 becomes more rigid overall. Guide strips or guide bars 25 to 28 can moreover be provided with adjusting means 29 to 31 or 32 to 35, for precise alignment or positioning or orientation relative to the main board 14, the adjusting means 29 to 35 being fastened to the main board 14. This ensures precise parallel guidance of the main board 14 and/or of the OPU 15.

It should be mentioned that the CE appliance 20 can also be in the form of a portable player or recorder.

It should further be mentioned that an appliance with a drive according to the invention can also be in the form of a desktop computer or a portable computer, and the drive can be in the form of a data drive or as a multimedia-capable drive or as a combination of these two drives.

It should further be mentioned that in a drive according to the invention, the motherboard does not have to be designed only for transporting just one data carrier, but can also be provided and designed for the simultaneous transporting of two or three or more data carriers.

## Claims

1. A drive (20A) for a disc-shaped optical data carrier (10) with a motherboard (14) on which motherboard electronic components for the control of drive functions are arranged, and
with a data carrier drive motor (9) for rotating driving of the data carrier (10), and
with an optical scanning unit (15) for the optical scanning of the data carrier (10), and with transporting means which transporting means are designed for picking up the data carrier and for transporting the data carrier into the drive (20A) and for transporting the data carrier out of the drive (20A), **characterized in that** the transporting means are realized by means of the motherboard (14), said motherboard (14) being supported on bearings so that it can be moved out of the drive (20A) and can be moved into the drive (20A).

2. A drive (20A) according to claim 1, wherein sliding bearings (17) secured in the drive (20A) are provided, which sliding bearings (17) are provided for sliding and guiding the motherboard (14) on its edges (14a, 14b).

3. A drive (20A) according to claim 2, wherein the edges of the board (14a, 14b) are provided with an edge protection means which edge protection means preferably has a lower resistance to sliding than the edges of the board (14a, 14b) themselves.

4. A drive (20A) according to claim 3, wherein the edge protection means is in the form of sheet metal (21, 22), preferably in U-profile shape, engaging with the board edges (14a, 14b) or encircling the board edges (14a, 14b).

5. A drive (20A) according to claim 1, wherein the data carrier drive motor (9) is arranged on the motherboard (14), and wherein the data carrier drive motor (9) is preferably equipped with a clamping device for firmly clamping the data carrier (10).

6. A drive (20A) according to claim 1, wherein the motherboard has guide bars or guide rails (25, 26), which are guided and slidebly movable in sliding bearings secured in the drive (20A).

7. A drive (20A) according to claim 6, wherein the guide bars or guide rails (25, 26) are secured on the motherboard (14) with possibility of adjustment in their inclination and/or in their alignment.

8. A drive (20A) according to claim 1, wherein the motherboard (14) is connected to an I/O board (1) via a flexible cable (2) or a flexible flat film formed with electrical conductor tracks.

9. A drive (20A) according to claim 1, wherein a drive motor (8) is arranged on the motherboard (14), which motor interacts with a stationary driving means arranged in the drive (20A) in order to move the motherboard (14) into or out of the drive (20A).

10. A drive (20A) according to claim 9, wherein the optical scanning unit (15) is arranged with possibility of displacement on the motherboard (14) and wherein the drive motor (8) is also provided for displacement of the optical scanning unit (15) in addition to the transporting of the motherboard (14).

11. A drive (20A) according to claim 1, wherein the motherboard (14) is supported in the drive (20A) by vibration damping means.

12. A drive (20A) according to claim 1, wherein a display (11) and/or operating elements is/are arranged on the motherboard (14).

13. A drive (20A) according to claim 1, wherein a front cover is arranged on the motherboard (14).

14. A consumer electronics (CE) appliance, preferably a CD/DVD player/recorder, wherein the appliance is provided with a drive (20A) according to one of the claims 1 to 13.

15. A method of transporting a disc-shaped optical data carrier (10) into a drive (20A) for the optical data carrier (10) and out of the drive (20A), said drive (20A) having a motherboard (14) on which motherboard (14) electronic components for controlling drive functions are arranged, **characterized in that** the data carrier (10) is transported by means of the motherboard (14) and wherein the motherboard (14) is moved out of the drive (20A) and into the drive (20A).

16. A method according to claim 15, wherein the motherboard (14) is guided on its edges (14a, 14b) so that it slides with the aid of sliding bearings (17) secured in the drive (20A).

17. A method according to claim 16, wherein the motherboard (14) slides on its edges (14a, 14b) with the aid of an edge protection means for the board edges, which edge protection means preferably has a lower resistance to sliding than the board edges (14a, 14b) themselves.

18. A method according to claim 15, wherein the data carrier (10) is held by means of a data carrier drive motor (9) arranged on the motherboard (14), said data carrier drive motor (9) having a clamping device for firmly clamping the data carrier (10).

19. A method according to claim 15, wherein the motherboard (14) is transported by means of guide bars (25, 26) or guide rails which are assigned to the motherboard (14) and are guided by sliding bearings secured in the drive (20A).

20. A method according to claim 15, wherein the motherboard (14) is moved out of the drive (20A) and into the drive (20A) by means of a drive motor (8) arranged thereon, which motor interacts with a stationary driving means arranged in the drive (20A).

21. A method according to claim 20, wherein an optical scanning unit (15), which is arranged on the motherboard (14) with possibility of displacement, is displaced by means of the disc drive motor independently of the transporting of the motherboard (14).

22. A method according to claim 15, wherein the vibrations of the motherboard (14) are damped by a vibration-damping mounting of the motherboard (14) in the drive (20A).

23. A method according to claim 15, wherein, during transporting of the motherboard (14), a display (11) arranged on the motherboard (14) and/or operating elements arranged on the motherboard (14) are also transported.

24. A method according to claim 15, wherein, during transporting of the motherboard (14), a front cover arranged on the motherboard (14) closes or opens a front of the drive in dependence on the direction of motion of the motherboard (14).

## Patentansprüche

1. Laufwerk (20A) für einen scheibenförmigen optischen Datenträger (10) mit einer Grundplatte (14), auf der elektronische Komponenten zum Steuern von Laufwerksfunktionen angeordnet sind, und
mit einem Datenträger-Antriebsmotor (9) zum drehenden Antreiben des Datenträgers (10) und
mit einer optischen Abtasteinheit (15) zum optischen Abtasten des Datenträgers (10) und mit Transportmitteln, die zum Aufnehmen des Datenträgers und zum Transportieren des Datenträgers in das Laufwerk (20A) hinein und zum Transportieren des Datenträgers aus dem Laufwerk (20A) heraus ausgebildet sind, **dadurch gekennzeichnet, dass** die Transportmittel mit Hilfe der Grundplatte (14) realisiert sind, welche Grundplatte (14) auf Lagern gelagert ist, sodass sie aus dem Laufwerk (20A) heraus bewegbar und in das Laufwerk (20A) hinein bewegbar ist.

2. Laufwerk (20A) nach Anspruch 1, wobei im Laufwerk (20A) befestigte Gleitlager (17) vorgesehen sind, die zum gleitenden Führen der Grundplatte (14) an ihren Kanten (14a, 14b) vorgesehen sind.

3. Laufwerk (20A) nach Anspruch 2, wobei die Kanten (14a, 14b) der Platte mit einem Kantenschutz versehen sind, der vorzugsweise einen geringeren Gleitwiderstand aufweist als die Plattenkanten (14a, 14b) selbst.

4. Laufwerk (20A) nach Anspruch 3, wobei der Kantenschutz als in die Plattenkanten (14a, 14b) eingreifendes oder die Plattenkanten (14a, 14b) umgreifendes Blech (21, 22), vorzugsweise in U-Profilform, ausgebildet ist.

5. Laufwerk (20A) nach Anspruch 1, wobei der Datenträger-Antriebsmotor (9) auf der Grundplatte (14) angeordnet ist und wobei der Datenträger-Antriebsmotor (9) vorzugsweise mit einer Klemmeinrichtung zum Festklemmen des Datenträgers (10)

6. Laufwerk (20A) nach Anspruch 1, wobei die Grundplatte Führungsstäbe oder Führungsschienen (25, 26) aufweist, die in im Laufwerk (20A) befestigten Gleitlagern gleitbar geführt sind.

7. Laufwerk (20A) nach Anspruch 6, wobei die Führungsstäbe oder Führungsschienen (25, 26) in ihrer Neigung und/oder in ihrer Ausrichtung einstellbar auf der Grundplatte (14) befestigt sind.

8. Laufwerk (20A) nach Anspruch 1, wobei die Grundplatte (14) über ein flexibles Kabel (2) oder eine flexible, mit elektrischen Leiterbahnen ausgebildete Flachfolie mit einer E/A-Platine (1) verbunden ist.

9. Laufwerk (20A) nach Anspruch 1, wobei auf der Grundplatte (14) ein Antriebsmotor (8) angeordnet ist, der mit einem im Laufwerk (20A) feststehend angeordneten Antriebsmittel zusammenwirkt, um die Grundplatte (14) in das Laufwerk (20A) hinein oder daraus heraus zu bewegen.

10. Laufwerk (20A) nach Anspruch 9, wobei die optische Abtasteinheit (15) auf der Grundplatte (14) verschiebbar angeordnet ist und wobei der Antriebsmotor (8) zusätzlich zu dem Transportieren der Grundplatte (14) auch zum Verschieben der optischen Abtasteinheit (15) vorgesehen ist.

11. Laufwerk (20A) nach Anspruch 1, wobei die Grundplatte (14) mittels schwingungsdämpfender Mittel im Laufwerk (20A) gelagert ist.

12. Laufwerk (20A) nach Anspruch 1, wobei auf der Grundplatte (14) ein Display (11) und/oder Bedienungselemente angeordnet ist/sind.

13. Laufwerk (20A) nach Anspruch 1, wobei auf der Grundplatte (14) eine Frontabdeckung angeordnet ist.

14. Consumer-Electronic-Gerät (CE-Gerät), vorzugsweise ein CD/DVD-Player/Recorder, wobei das Gerät mit einem Laufwerk (20A) nach einem der Ansprüche 1 bis 13 versehen ist.

15. Verfahren zum Transportieren eines scheibenförmigen optischen Datenträgers (10) in ein Laufwerk (20A) für den optischen Datenträger (10) hinein und aus dem Laufwerk (20A) heraus, welches Laufwerk (20A) eine Grundplatte (14) aufweist, auf der elektronische Komponenten zum Steuern von Laufwerksfunktionen angeordnet sind, **dadurch gekennzeichnet, dass** der Datenträger (10) mit Hilfe der Grundplatte (14) transportiert wird und wobei die Grundplatte (14) aus dem Laufwerk (20A) heraus und in das Laufwerk (20A) hinein bewegt wird.

16. Verfahren nach Anspruch 15, wobei die Grundplatte (14) an ihren Kanten (14a, 14b) mit Hilfe von in dem Laufwerk (20A) befestigten Gleitlagern (17) gleitend geführt wird.

17. Verfahren nach Anspruch 16, wobei die Grundplatte (14) an ihren Kanten (14a, 14b) mit Hilfe eines Kantenschutzes für die Plattenkanten gleitet, der vorzugsweise einen geringeren Gleitwiderstand aufweist als die Plattenkanten (14a, 14b) selbst.

18. Verfahren nach Anspruch 15, wobei der Datenträger (10) mit Hilfe eines auf der Grundplatte (14) angeordneten Datenträger-Antriebsmotors (9) gehalten wird, welcher Datenträger-Antriebsmotor (9) eine Klemmeinrichtung zum Festklemmen des Datenträgers (10) aufweist.

19. Verfahren nach Anspruch 15, wobei die Grundplatte (14) mit Hilfe von Führungsstäben (25, 26) oder Führungsschienen transportiert wird, die der Grundplatte (14) zugeordnet sind und die durch in dem Laufwerk (20A) befestigte Gleitlager geführt werden.

20. Verfahren nach Anspruch 15, wobei die Grundplatte (14) mit Hilfe eines auf ihr angeordneten Antriebsmotors (8), der mit einem im Laufwerk (20A) feststehend angeordneten Antriebsmittel zusammenwirkt, aus dem Laufwerk (20A) heraus und in das Laufwerk (20A) hinein bewegt wird.

21. Verfahren nach Anspruch 20, wobei eine optische Abtasteinheit (15), die verschiebbar auf der Grundplatte (14) angeordnet ist, mit Hilfe des Platten-Antriebsmotors unabhängig von dem Transportieren der Grundplatte (14) verschoben wird.

22. Verfahren nach Anspruch 15, wobei die Schwingungen der Grundplatte (14) durch eine schwingungsdämpfende Montage der Grundplatte (14) in dem Laufwerk (20A) gedämpft werden.

23. Verfahren nach Anspruch 15, wobei beim Transportieren der Grundplatte (14) ein auf der Grundplatte (14) angeordnetes Display (11) und/oder auf der Grundplatte (14) angeordnete Bedienungselemente mittransportiert werden.

24. Verfahren nach Anspruch 15, wobei beim Transportieren der Grundplatte (14) eine Frontabdeckung, die auf der Grundplatte (14) angeordnet ist, in Abhängigkeit von der Bewegungsrichtung der Grundplatte (14) eine Front des Laufwerks verschließt oder öffnet.

## Revendications

1. Lecteur (20A) pour un support de données optiques en forme de disque (10) avec une carte mère (14) sur laquelle carte mère (14) des composants électroniques pour la commande de fonctions de lecteur sont disposés, et
avec un moteur de lecteur de support de données (9) pour entraîner le support de données (10) en rotation, et
avec une unité de lecture optique (15) pour la lecture optique du support de données (10), avec un moyen de transport lequel moyen de transport est conçu pour prendre le support de données et pour transporter le support de données dans le lecteur (20A) et pour transporter le support de données en dehors du lecteur (20A), **caractérisé en ce que** le moyen de transport est réalisé au moyen de la carte mère (14), ladite carte mère (14) étant supportée sur des supports de façon qu'elle peut être déplacée en dehors du lecteur (20A) et qu'elle peut être déplacée dans le lecteur (20A).

2. Lecteur (20A) selon la revendication 1, dans lequel des supports glissants (17) fixés dans le lecteur (20A) sont disposés, lesquels supports glissants (17) sont disposés pour glisser et guider la carte mère (14) sur ses bords (14a, 14).

3. Lecteur (20A) selon la revendication 2, dans lequel les bords de la carte (14a, 14b) sont pourvus d'un moyen de protection de bord, lequel moyen de protection de bord a de préférence une résistance au glissement plus faible que les bords de la carte (14a, 14b) eux-mêmes.

4. Lecteur (20A) selon la revendication 3, dans lequel le moyen de protection de bord est dans la forme d'une feuille de métal (21, 22), de préférence en forme de profil en U, se mettant en prise avec les bords de carte (14a, 14b) ou entourant les bords de carte (14a, 14b).

5. Lecteur (20A) selon la revendication 1, dans lequel le moteur de lecteur de support de données (9) est disposé sur la carte mère (14), et dans lequel le moteur de lecteur de support de données (9) est de préférence pourvu d'un dispositif de fixation pour fixer fermement le support de données (10).

6. Lecteur (20A) selon la revendication 1, dans lequel la carte mère a des barres de guidage ou rails de guidage (25, 26) qui sont guidés et peuvent être déplacés de façon glissante dans des supports glissants fixés dans le lecteur (20A).

7. Lecteur (20A) selon la revendication 6, dans lequel les barres de guidage ou rails de guidage (25, 26) sont fixés sur la carte mère (14) avec une possibilité de réglage de leur inclinaison et / ou leur alignement.

8. Lecteur (20A) selon la revendication 1, dans lequel la carte mère (14) est connectée à une carte d'entrée / sortie I/O (1) par un câble flexible (2) ou un film plat flexible formé avec des pistes électriques conductrices.

9. Lecteur (20A) selon la revendication 1, dans lequel un moteur d'entraînement (8) est disposé sur la carte mère (14), lequel moteur interagit avec un moyen d'entraînement stationnaire disposé dans le lecteur (20A) de façon à déplacer la carte mère (14) dans ou en dehors du lecteur (20A).

10. Lecteur (20A) selon la revendication 9, dans lequel l'unité de lecture optique (15) est disposée avec une possibilité de déplacement sur la carte mère (14), et dans lequel le moteur d'entraînement (8) est également disposé pour un déplacement de l'unité de lecture optique (15) en plus du transport de la carte mère (14).

11. Lecteur (20A) selon la revendication 1, dans lequel la carte mère (14) est supportée dans le lecteur (20A) par des moyens amortisseurs de vibrations.

12. Lecteur (20A) selon la revendication 1, dans lequel un affichage (11) et / ou des éléments fonctionnels sont disposés sur la carte mère (14).

13. Lecteur (20A) selon la revendication 1, dans lequel un couvercle frontal est disposé sur la carte mère (14).

14. Appareil électronique grand public (CE), de préférence un lecteur / enregistreur de CD / DVD, dans lequel l'appareil est pourvu d'un lecteur (20A) selon une des revendications 1 à 13.

15. Procédé pour transporter un support de données optiques en forme de disque (10) dans un lecteur (20A) pour le support de données optiques (10) et le sortir du lecteur (20A), ledit lecteur (20A) ayant une carte mère (14) sur laquelle carte mère (14) des composants électroniques sont disposés pour commander des fonctions de lecteur, **caractérisé en ce que** le support de données (10) est transporté au moyen de la carte mère (14) et dans lequel la carte mère (14) est déplacée en dehors du lecteur (20A) et dans le lecteur (20A).

16. Procédé selon la revendication 15, dans lequel la carte mère (14) est guidée sur ses bords (14a, 14b) de façon qu'elle glisse avec l'aide de supports glissants (17) fixés dans le lecteur (20A).

17. Procédé selon la revendication 16, dans lequel la carte mère (14) glisse sur ses bords (14a, 14b) avec l'aide de moyens de protection de bord pour les bords de la carte, lesquels moyens de protection de bord ont de préférence une résistance au glissement inférieure à celle des bords de carte (14a, 14b) eux-mêmes.

18. Procédé selon la revendication 15, dans lequel le support de données (10) est maintenu au moyen d'un moteur de lecteur de support de données (9) disposé sur la carte mère (14), ledit moteur de lecteur de support de données (9) ayant un dispositif de fixation pour fixer fermement le support de données (10).

19. Procédé selon la revendication 15, dans lequel la carte mère (14) est transportée au moyen de barres de guidage (25, 26) ou rails de guidage qui sont attribués à la carte mère (14) et sont guidés par des supports glissants fixés dans le lecteur (20A).

20. Procédé selon la revendication 15, dans lequel la carte mère (14) est déplacée en dehors du lecteur (20A) et dans le lecteur (20A) au moyen d'un moteur d'entraînement (8) qui y est disposé, lequel moteur interagit avec un moyen d'entraînement stationnaire disposé dans le lecteur (20A).

21. Procédé selon la revendication 20, dans lequel une unité de lecture optique (15), qui est disposée sur la carte mère (14) avec possibilité de déplacement, est déplacée au moyen du moteur de lecteur de disque indépendamment du transport de la carte mère (14).

22. Procédé selon la revendication 15, dans lequel les vibrations de la carte mère (14) sont amorties par un montage amortisseur de vibrations de la carte mère (14) dans le lecteur (20A).

23. Procédé selon la revendication 15, dans lequel, pendant un transport de la carte mère (14), un affichage (11) disposé sur la carte mère (14) et / ou des éléments fonctionnels disposés sur la carte mère (14) sont également transportés.

24. Procédé selon la revendication 15, dans lequel, pendant un transport de la carte mère (14), un couvercle frontal disposé sur la carte mère (14) ferme ou ouvre une face frontale du lecteur, en fonction de la direction de déplacement de la carte mère (14).
